Europäisches Patentamt

European Patent Office    (11) Numéro de publication: **0 107 852**

Office européen des brevets    **B1**

(12)                **FASCICULE DE BREVET EUROPÉEN**

(45) Date de publication du fascicule du brevet:    (51) Int. Cl.⁴: **A 47 J 27/16, F 22 B 3/04**
26.11.86

(21) Numéro de dépôt: **83110630.7**

(22) Date de dépôt: **25.10.83**

(54) Installation de traitement thermique de morceaux de matières animales.

(30) Priorité: **26.10.82 FR 8217872**

(43) Date de publication de la demande:
**09.05.84 Bulletin 84/19**

(45) Mention de la délivrance du brevet:
**26.11.86 Bulletin 86/48**

(84) Etats contractants désignés:
**BE CH DE FR GB IT LI LU NL SE**

(56) Documents cité:
**DE-A-3 015 716**
**FR-A-1 294 079**
**FR-A-2 426 442**

(73) Titulaire: **ALSTHOM, 38, avenue Kléber, F-75784**
**Paris Cédex 16 (FR)**
Titulaire: **SEMADA Société Anonyme dite:, 14,**
**route de Cuzon, F-29000 Quimper (FR)**
Titulaire: **SOCIETE INDUSTRIELLE LORIENTAISE**
**(S.I.L.) Société Anonyme dite:, 17, rue Henri**
**Estier, F-56100 Lorient (FR)**

(72) Inventeur: **Guiriec, Gérard, 12, route de Cuzon,**
**F-29000 Quimper (FR)**

(74) Mandataire: **Weinmiller, Jürgen, Lennéstrasse 9,**
**D-8133 Feldafing (DE)**

LIBER, STOCKHOLM 1986

## Description

Dans les usines d'équarrissage d'animaux, les cadavres passent dans des broyeurs qui réduisent les os et les chairs en morceaux d'environ trente millimètres de côtés. Ensuite, ces morceaux contenant 60% d'humidite sont envoyés dans un cuiseur où ils cuisent en perdant une bonne partie de leur humidité ; ils sortent de là sous la forme d'une espèce de farine contenant 10% d'humidité. Le cuiseur constitue un four, chauffé avec de la vapeur à 150°C. La vapeur est produite dans un générateur de vapeur consommant du mazout. L'humidité abandonnée par les matières solides introduites dans le cuiseur sort sous forme de vapeur qui est condensée dans un condenseur dont l'eau de réfrigération est refroidie, après son passage dans le condenseur, dans un aéro-réfrigérant. L'eau condensée dans le condenseur est ensuite rejetée à l'égout, il s'agit de condensats très sales. Dans une installation de ce genre, les calories contenues dans la vapeur dégagée par les matières solides au cours de leur traitement thermique sont perdues dans l'atmosphère par le flux d'air sortant du dispositif aéro-réfrigérant. Or, ces vapeurs sortent du cuiseur à 100°C et contiement donc beaucoup de calories.

La présente invention a pour but de récupérer une grande partie des calories contenues dans la vapeur dégagée par les matières solides dans le cuiseur.

L'invention a donc pour objet une installation de traitement thermique de morceaux de matières animales, comprenant un cuiseur comportant une entrée pour lesdits morceaux de matière, une sortie pour la matière traitée, une sortie pour la vapeur molle dégagée par les matières au cours du traitement, une entrée pour de la vapeur de chauffage et une sortie pour le condensat de la vapeur de chauffage, un condenseur recevant la vapeur molle dégagée par les matières traitées, ledit condenseur comportant une sortie en trop plein pour le condensat de ladite vapeur molle, caractérisée en ce que le fluide de refroidissement dudit condenseur est constitué par une circulation du propre condensat des vapeurs molles, un échangeur de chaleur étant situé sur ce circuit de manière à transférer les calories recueillies au cours de la condensation des vapeurs molles, au circuit secondaire de cet échageur parcouru par de l'eau propre, la sortie dudit circuit secondaire alimentat au niveau de la phase vapeur une bouteille de vaporisation rapide dont la sortie vapeur est dirigée vers un groupe de compression dont la sortie alimente ladite entrée de vapeur de chauffage du cuiseur, ledit condensat de la vapeur de chauffage alimentant, en sortie du cuiseur, ladite bouteille de flash dans sa partie liquide, l'entrée du circuit secondaire dudit échangeur étant alimenté par la phase liquide de la bouteille de vaporisation rapide.

Selon une réalisation préférée de l'installation selon 1, invention, le fluide de refroidissement du condenseur, constitue par une circulation du condensat des vapeurs molles, est pulvérisé dans le condenseur, la surface d'échange àvec la vapeur molle étant constituée par la surface des gouttelettes dudit fluide pulvérisé.

De préférence, ledit groupe de compression comprend plusieurs étages, la sortie d'un étage intermédiaire alimentant en barbotage une bouteille de désurchauffe recevant une partie du condensat de la vapeur de chauffage, la sortie vapeur de ladite bouteille alimentant l'étage suivant du groupe de compression.

L'invention sera décrite ci-après plus en détail à l'aide d'un exemple de réalisation et en regard du dessin annexé dans lequel:

- La figure 1 représente schématiquement une installation connue de traitement thermique de déchets animaux.

- La figure 2 représente schématiquement une installation de traitement thermique de déchets animaux conforme à l'invention.

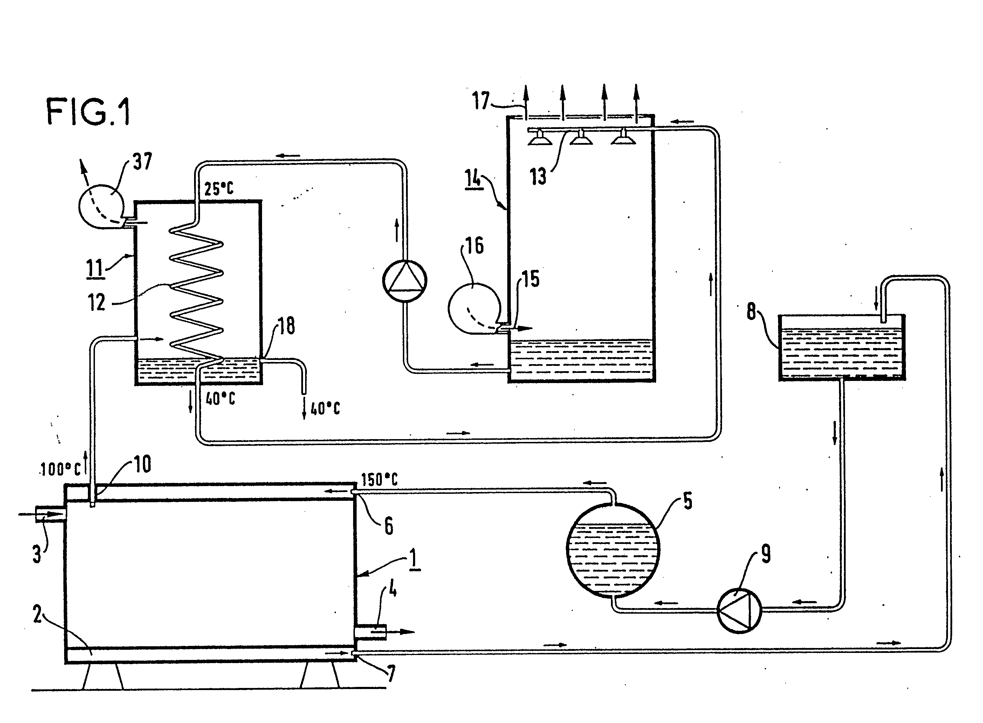

L'installation connue, représentée par la figure 1, comprend un cuiseur 1 à chauffage par vapeur à 150° C. Le cuiseur comporte une double enveloppe et un rotor chauffant comportant un circuit pour la vapeur qui passe également dans la paroi à double enveloppe. Pour la simplification du dessin, le rotor n'a pas été représenté, mais seulement la double enveloppe laissant un espace 2 pour la circulation de la vapeur.

Le cuiseur 1 comprend une entrée 3 pour l'introduction des matières animales dont la teneur moyenne en humidité est de 60% et une sortie 4 par laquelle la matière traitée ressort sous forme d'une espèce de farine contenant 10% d'humidité. La vapeur de chauffage, à 150°C est produite par un générateur de vapeur 5, elle entre par une entrée 6 du cuiseur et elle en ressort par une sortie 7 ou elle est dirigée vers une bâche à eau 8 ; une pompe 9 renvoie l'eau vers le generateur de vapeur 5. L'arrivée des matières en 3 est continue. Les vapeurs molles dégagées par les matières au cours de leur passage dans le cuiseur sortent par une sortie 10 et sont envoyées dans un condenseur 11 refroidi par un circuit d'eau 12 dont la sortie est envoyée sur une rampe de pulvérisation 13 d'un dispositif aéro-réfrigérant 14 comportant une entrée d'air 15 aspiré par un ventilateur 16 et qui ressort saturé d'humidité vers le haut en 17.

Le condenseur 11 comporte une sortie en trop plein 18 par ou s'écoulent les condensats de vapeur molle qui sont rejetés à l'égout. Les gaz incondensables sont extraits par un extracteur 37.

Ainsi, les calories abandonnées par les vapeurs molles, sortant du cuiseur 1, au circuit de refroidissement 12 sont intégralement rejetées en pure perte dans l'atmosphère au niveau du dispositif aéro-réfrigérant 14.

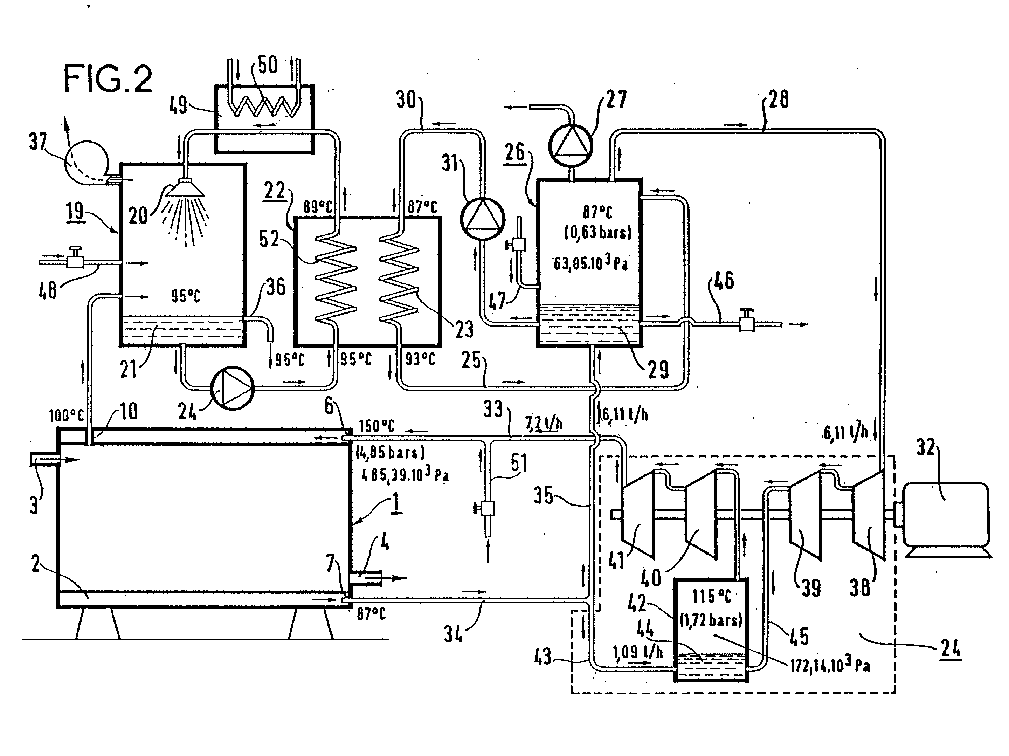

Sur la figure 2 qui représente une installation selon l'invention, on utilise identiquement le même cuiseur 1, mais les vapeurs molles à 100° C dégagées dans le cuiseur par les matières traitées sont envoyées dans un condenseur à pulvérisation 19, dans lequel l'eau de refroidissement pulvérisée à 89°C en 20 est constituée par une partie du propre condensat 21 à 95° C de la vapeur molle condensée préalablement refroidie de 95°C à 89°C dans un échangeur 22 dont le circuit secondaire 23 absorbe les calories provenant de la condensation des vapeurs molles dans le condenseur à pulvérisation 19. Une pompe 24 assure la circulation des condensats.

Un condenseur classique, par surface au lieu du condenseur à pulvérisation 19, demanderait des surfaces d'échange énormes et ne serait pas fiable dans le temps. En effet, la vapeur molle à condenser entraîne en même temps des particules de farine et de matières graisseuses colmatant rapidement les surfaces d'échange, tandis que dans l'échangeur à pulvérisation 19, la surface d'échange est constituée par la surface des gouttelettes d'eau pulvérisée, le coefficient d'échange reste ainsi constant et les températures de fonctionnement restent stables.

Ainsi, dans l'installation selon l'invention, les calories dégagées par la condensation des vapeurs molles d'un fluide très impur sont transférées au secondaire 23 de l'échangeur 22. Ce secondaire 23 est parcouru par une eau propre compatible avec le fonctionnement d'un groupe compresseur 24.

A la sortie du secondaire 23 de l'échangeur 22, l'eau est envoyée par une conduite 25 à la partie supérieure d'une bouteille de vaporisation rapide 26 maintenue à une faible pression par une pompe à vide 27, dans laquelle l'eau se détend en se vaporisant partiellement, les vapeurs étant envoyées par une conduite 28 à l'entrée du groupe de compression 24. Une telle bouteille est souvent appelée une bouteille de flash. L'entrée du secondaire 23 de l'échangeur 22 est alimentée en eau du condensat 29 de la bouteille 26 par une conduite 30 et la circulation est assurée par une pompe 31. Le groupe de compression 24 est entraîné par un moteur électrique 32 qui fournit l'énergie nécessaire pour rehausser le niveau thermo-dynamique de la vapeur de 87°C et 63, 05.10³ Pa (0,63 bars) à la sortie de la bouteille de vaporisation rapide 26 à 150°C et 485,39. 10³ Pa (4,85 bars) à la sortie du groupe de compression. A la sortie du groupe de compression, cette vapeur est fournie au cuiseur 1 par une conduite 33.

En sortie du cuiseur 1, les condensats sortent à 87°C et vont alimenter, par des conduites 34 et 35, la phase liquide 29 de la bouteille 26.

Le condenseur à pulvérisation 19 comprend en outre une sortie en trop plein 36 par où s'écoule le condensat de vapeur molle envoyé aux égouts. Ce condenseur comprend également une sortie munie d'un extracteur 37 pour les gaz incondensables.

Le groupe de compression 24 comprend quatre étages 38, 39, 40 et 41 de compresseurs centrifuges et une bouteille 42 de désurchauffe alimentée en eau à 87°C par un piquage réalisé sur la sortie du cuiseur au moyen d'une conduite 43 et en vapeur envoyée en barbotage dans l'eau 44 au moyen d'une conduite 45 par la sortie du compresseur 39. La vapeur de cette bouteille, à 115°C et 172,14.10 Pa (1,72 bars), est envoyée à l'entrée du troisième étage de compresseur centrifuge 40.

A l'entrée 3 du cuiseur, on introduit 11 tonnes à 1 heure de produit à 15°C et contenant 60% d'humidité. A la sortie 4, on obtient 4,89 tonnes à l'heure de produit contenant 10% d'humidité et le traitement dégage 6,11 tonnes à l'heure de vapeurs molles à 100°C.

A l'entrée 6 dans le cuiseur, la vapeur de chauffage à 150°C arrive avec un débit de 7,2 tonnes à l'heure et à la sortie 7 du cuiseur, 6,11 tonnes/heure sont envoyées vers la bouteille de vaporisation rapide 26 et 1,09 tonnes/heure en piquage vers la bouteille de désurchauffe 42.

Au secondaire 23 de l'échangeur 22, l'eau entre à 87°C et en sort à 93°C.

Le flux thermique contenu dans la vapeur de chauffage à l'entrée est de $17,11.10^9$ joules (4092 thermies) ajoutes aux $0,55.10^9$ joules (132 thermies) contenus dans les matières à l'entrée du cuiseur, donnant $17,66. 10^9$ joules (4224 thermies) qui se répartissent en sortie de la manière suivante : $0,51.10^9$ joules (123 thermies) de déperdition du cuiseur, $0,82.10^9$ joules (196 thermies ) dans les matières en sortie du cuiseur et $16,32.10^9$ joules (3905 thermies) dans les vapeurs molles dégagées au cours de la cuisson. Sur ces $16,32.10^9$ joules (3905 thermies), on en récupère $13,89. 10^9$ joules (3324 thermies) à la sortie vapeur de la bouteille de vaporisation rapide 26.

Compte tenu que le moteur 32 perd $0,18.10^9$ joules (43 thermies), le groupe de compression $0,17. 10^9$ joules (41 thermies) et que la vapeur de chauffage contient $17,11.10^9$ joules (4092 thermies) à la sortie du groupe de compression, la puissance thermique totale à fournir est de : $17,11.10^9 + 0,18.10^9 + 0,17.10^9 = 17,46.10^9$ joules $(4092 + 43 + 31 = 4176$ thermies). La vapeur à la sortie de la bouteille de vaporisation rapide 26 contenant $13,89. 10^9$ joules (3324 thermies), la puissance à fournir sous forme électrique au moteur 32 est donc de $17,46. 10^9$ joules - $13,89.10^9$ joules $= 3,57.10^9$ joules $(4176 - 3324 = 852$ thermies).

On fournit donc de l'exterieur $3,57. 10^9$ joules (852 thermies) à l'heure au lieu de la totalité dans le cas de l'art antérieur, représenté par la figure 1, c'est-à-dire $17,11.10^9$ joules (4092 thermies ) a l'heure.

Bien entendu, les chiffres donnés ne font qu'illustrer un exemple numérique nullement limitatif.

Pour le démarrage de l'installation, la vapeur est fournie par un générateur de vapeur par une conduite 51 et la bouteille de vaporisation rapide 26 alimente en sortie par une conduite 46 la bâche à eau du générateur. De même, une conduite 47 permet au démarrage d'alimenter en eau le circuit 29, 30, 23, 25 et une conduite 48 permet aussi au démarrage d'alimenter le circuit de refroidissement du condenseur 19. Enfin, en cas d'avarie du groupe de compression 24, et éventuellement au démarrage, le circuit de refroidissement du condenseur 19 comporte un échangeur 49 dont le secondaire 50 est refroidi par un dispositif aéro-réfrigérant non représenté, mais semblable a celui 14 de la figure 1. Dans cet échangeur, l'eau de refroidissement entre à 30°C et en sort à 50°C et le débit est de 166 m3/h.

Bien entendu, tout ceci ne fonctionne qu'au démarrage, et encore éventuellement seulement en ce qui concerne cet échangeur 49, et en cas de secours.

Dans l'échangeur 22, le débit est identique au primaire 52 et au secondaire 23 et égal à 554 m3/h, tandis que lors de l'utilisation éventuelle de l'échangeur 49 le débit, au secondaire 50, n'est que de 166 m3/h, compte tenu des températures d'entrée et de sortie qui ont vingt degrés d'écart au lieu de six seulement au primaire.

Les pertes de vapeur vers l'extérieur sont compensées par un appoint dans la bouteille de vaporisation rapide au moyen d'un dispositif à flotteur à niveau constant.

## Revendications

1/ Installation de traitement thermique de morceaux de matières animales, comprenant un cuiseur (1) comportant une entrée (3) pour lesdits morceaux de matière, une sortie (4) pour la matière traitée, une sortie (10) pour la vapeur molle dégagée par les matières au cours du traitement, une entrée (6) pour de la vapeur de chauffage et une sortie (7) pour le condensat de la vapeur de chauffage, un condenseur (19) recevant la vapeur molle dégagée par les matières traitées, ledit condenseur comportant une sortie en trop plein (36) pour le condensat de ladite vapeur molle, caractérisée en ce que le fluide de refroidissement dudit condenseur est constitué par une circulation du propre condensat (21) des vapeurs molles, un échangeur de chaleur (22) étant situé sur ce circuit de manière à transférer les calories recueillies au cours de la condensation des vapeurs molles, au circuit secondaire (23) de cet échangeur parcouru par de l'eau propre, la sortie dudit circuit secondaire alimentant au niveau de la phase vapeur une bouteille de vaporisation rapide (26) dont la sortie vapeur est dirigée vers un groupe de compression (24) dont la sortie alimente ladite entrée de vapeur de chauffage dudit cuiseur, ledit condensat de la vapeur de chauffage alimentant en sortie du cuiseur ladite bouteille de vaporisation rapide dans sa partie liquide (29), l'entrée du circuit secondaire dudit échangeur étant alimentée par la phase liquide de la bouteille de vaporisation rapide.

2/ Installation selon la revendication 1, caractérisée en ce que le fluide de refroidissement du condenseur, constitué par une circulation du condensat (21) des vapeurs molles, est pulvérisé (20) dans le condenseur, la surface d'échange avec la vapeur molle étant constituée par la surface des gouttelettes dudit fluide pulvérisé.

3/ Installation selon la revendication 2, caractérisée en ce que ledit groupe de compression comprend plusieurs étages (38 à 4 1), la sortie d'un étage intermédiaire (39) alimentant en barbotage une bouteille de désurchauffe (42) recevant une partie du condensat de la vapeur de chauffage, la sortie vapeur de ladite bouteille alimentant l'étage suivant (40) du groupe de compression.

## Patentansprüche

1. Einrichtung zur Wärmebehandung von Stücken tierischen Materials, mit einem Kocher (1), der einen Eingang (3) für das Einführen der Materialstücke, einen Ausgang (4) für das behandelte Material, einen Ausgang (10) für den von den Stücken während der Behandlung abgegebenen Dunst, einen Eingang (8) für Heißdampf und einen Ausgang (7) für das Kondensat des Heißdampfs aufweist, wobei ein Kondensator (19) den von dem behandelten Material abgegebenen Dunst empfängt und dieser Kondensator einen Überlaufausgang (36) für das Kondensat des Dunstes aufweist, dadurch gekennzeichnet, daß das Abkühlfluid dieses Kondensators aus einer Zirkulation des eigentlichen Kondensats (21) der Dünste besteht, wobei ein Wärmetauscher (2;) so in diesem Kreislauf angeordnet ist, daß die während der Kondensierung der Dünste aufgefangenen Kalorien auf den Sekundärkreislauf (23) dieses Wärmetauschers übertragen werden, der von sauberem Wasser durchflossen wird, wobei der Ausgang des Sekundärkreises in Höhe der Dampfphase eine Flasche zur schnellen Verdampfung (26) versorgt, deren Dampfausgang an ein Kompressionsaggregat (24) angeschlossen ist, dessen Ausgang den Heißdampfeingang des Kochers versorgt, wobei das Kondensat des Heißdampfs am Ausgang des Kochers die Flasche zur schnellen Verdampfung in ihrem flüssigen Teil (29) versorgt und der Eingang des Sekundärkreises des Wärmetauschers von der flüssigen Phase der Flasche zur schnellen Verdampfung versorgt wird.

2. Einrichtung nach Anspruch 1, dadurch gekennzeichnet, daß das Abkühlfluid des Kondensators, das aus einer Zirkulation des Kondensats (21) der Dünste gebildet wird, im Kondensator pulverisiert (20) wird, wobei die Austauschoberfläche mit dem Dunst aus der Oberfläche der Tröpfchen dieses pulverisierten Fluids besteht.

3. Einrichtung nach Anspruch 2, dadurch gekennzeichnet, daß das Kompressionsaggregat mehrere Stufen (38 bis 41) aufweist, wobei vom Ausgang einer Zwischenstufe (39) Dampf blubbernd in eine Abkühlflasche (42) gelangt, die einen Teil des Kondensats des Heißdampfs zugeführt erhält, während der Dampfausgang dieser Flasche zur folgenden Stufe (40) des Kompressionsaggregats führt.

## Claims

1. An installation for the thermal treatment of chunks of animal matter, comprising a cooker (1) having an inlet (3) for said chunks of animal matter, an outlet (4) for the treated matter, an outlet (10) for fume delivered by the matter during the treatment, an inlet (8) for heating steam, and an outlet (7) for heating steam condensate, a condenser (19) receiving the fume delivered by the treated matter, said condenser having an overflow outlet (38) for the condensate from said fume, characterized in that the cooling fluid of said condenser is constituted by a circulation of the fume condensate (21) itself, a heat exchanger (22) being incorporated in this circuit so as to transfer the calories received during the condensation of the fume, to the secondary circuit (23) of this exchanger through which clean water passes, the outlet of this secondary circuit supplying steam to a bottle for rapid vaporisation (28), the steam outlet of which is directed towards a compression group (24), the outlet of which supplies steam to said heating steam inlet of said cooker, said condensate of the heating steam being supplied from the outlet of the cooker to said bottle for rapid vaporisation in its liquid phase (29), the inlet of the secondary circuit of said exchanger being supplied with the liquid phase of the bottle for rapid vaporisation.

2. An installation according to claim 1, characterized in that the cooling fluid of the condensor, which is constituted by a circulation of the fume condensate (21), is sprayed (20) into the condensor, the exchange surface with the fume being constituted by the surface of the spray droplets of said sprayed fluid.

3. An installation according to claim 2, characterized in that said compression group comprises a plurality of stages (38 to 41), the outlet of an intermediate stage (39) supplying bubbling steam to a bottle for preventing overheating (42) which receives part of the heating steam condensate, the steam outlet of said bottle being connected to the following stage (40) of the compression group.

FIG.1

FIG.2